# EUROPÄISCHE PATENTSCHRIFT

(11) **EP 1 101 047 B1**
(45) Veröffentlichungstag und Bekanntmachung des Hinweises auf die Patenterteilung: **24.09.2003**
(21) Anmeldenummer: 99936475.5
(22) Anmeldetag: 02.07.1999
(51) Int. Cl.: F16G 11/00, B29C 45/14

(54) **SEILENDVERBINDUNG**
CABLE END CONNECTION
RACCORD TERMINAL DE CABLE

(30) Priorität: 02.07.1998 DE 19829688
(43) Veröffentlichungstag der Anmeldung: 23.05.2001
(73) Patentinhaber: ASM Automation Sensorik Messtechnik GmbH, 85452 Moosinning (DE)
(72) Erfinder: STEINICH, Klaus-Manfred, D-85604 Poering (DE)
(74) Vertreter: Alber, Norbert, Dipl.-Ing.
(86) Internationale Anmeldenummer: EP9904627
(87) Internationale Veröffentlichungsnummer: WO00001957

(56) Entgegenhaltungen:
- FR-E- 71 087
- US-A- 2 674 824
- US-A- 3 287 483
- US-A- 3 705 445

## Beschreibung

Die Verbindung betrifft eine
- Seilendverbindung zwischen einem Seilende und einem Adapterteil,
- ein Verfahren zur Herstellung einer solchen Seilendverbindung und
- eine Form zum Umspritzen oder Umgießen einer solchen Seilendverbindung aus einem spritzfähigen oder gießfähigen Material.

Seilendverbindungen sind generell notwendig, wenn am Ende eines endlichen Seiles, Drahtes, Kabels oder ähnlichem weitere Bauteile befestigt werden müssen.

Dies geschieht dann in der Regel so, daß an dem freien Ende des Seils ein Adapterteil befestigt wird, welches eine definierte Befestigungsöffnung, Befestigungsgewinde oder eine andere Befestigungsvorrichtung für anzuordnende weitere Bauteile aufweist.

Dabei ist es bekannt, das Adapterteil entweder direkt mit dem Seil zu verpressen, oder den Endbereich des Seils als Schlaufe um das Adapterteil, etwa eine Kausche, herumzulegen und die beiden Seilbereiche durch ein separates Klemmteil miteinander zu verpressen.

In vielen Anwendungsfällen müssen derartige Seilendverbindungen auch widerstandsfähig gegen dynamische, besonders in Längsrichtung, aber auch in Querrichtung, des Seils auftretende Belastungen ausgebildet sein.

Ein solcher Anwendungsfall ist das Meßseil von Wegsensoren bzw. Positionssensoren, die nach dem Meßseilprinzip aufgebaut sind, bei welcher also das endliche Seil in einer definierten Wicklung auf einer Seiltrommel aufgewickelt ist, welche mittels Federkraft in die aufwickelnde Richtung vorgespannt ist, wobei das freie Ende des Seils an demjenigen Gegenstand befestigt wird, dessen Lage bzw. Wegveränderung überwacht werden soll.

Entsprechend ist am freien Ende eines solches Meßseiles ebenfalls eine Seilendverbindung mit einem passenden Adapterteil vorhanden.

Gerade bei derartigen Meßseilen besteht das Problem, daß das Seil vergleichsweise dünn ausgebildet ist, und dennoch vor allem die Seilendverbindung ausreichend gegen schädigende Einwirkungen von außen - Korrosion ebenso wie mechanische Beschädigung - geschützt sein muß, da ansonsten der entsprechende Positionssensor nicht funktionsfähig ist bzw. fehlerhafte Ergebnisse liefert.

Eine solche mechanische Beschädigung kann beispielsweise dadurch geschehen, daß das Meßseil im ganz oder teilweise ausgezogenen Zustand versehentlich losgelassen wird, und - beschleunigt durch die Federvorspannung der Wickeltrommel - mit hoher Geschwindigkeit auf die Seileinlauföffnung der Wickeltrommel aufschlägt, die nur geringfügig größer ist als der Seildurchmesser und somit von der Seilendverbindung nicht durchlaufen werden kann.

Je nach Auszugsrichtung etc. treten dabei auf das Seil und insbesondere die Seilendverbindung hohe Belastungen sowohl in Längsrichtung des Seils als auch quer hierzu auf, die entweder das Seil reißen lassen, oder die Seilendverbindung lockern oder aufgehen lassen, da beim Auftreffen auf die Seildurchführung die kinetische Energie auf sehr kurzem Weg abgebaut wird.

Um dies zu vermeiden, ist es bisher bekannt, eine Tülle aus elastischem Material wie etwa Gummi entweder an dem Einlauf der Wickeltrommel oder auf dem Seil kurz vor der Seilendverbindung anzubringen, um die auftretenden Verzögerungswerte zu senken. Bei großen Auszugslängen sind derartige Gummitüllen nicht ausreichend, und insbesondere bestehen zusätzliche Nachteile bei dieser bekannten Lösung:

Beim Anordnen der Gummitülle am Seileinlauf der Wickeltrommel tritt unerwünscht hohe Reibung während der normalen Funktion des Meßseilsensors zwischen dem Meßseil und der Gummitülle auf.

Bei Anordnung am Meßseil in der Nähe der Seilendverbindung umschließt die Gummitülle das Meßseil bzw. das Klemmteil, mit dem das Meßseil zu einer Schlaufe geschlossen und verklemmt wird, nur lose. Dementsprechend ist eine Verlagerung der Gummitülle entlang des Seils unerwünschterweise möglich, und Verschmutzung bzw. Korrosion im Spielraum zwischen Gummitülle und Seil kann zur Verbindungsstelle vordringen bzw. dort auftreten.

Auch der Herstellungsaufwand ist erheblich, da die Gummitülle vor dem Erstellen der Seilendverbindung, also dem Befestigen des Adapterteiles (Öse, Gewindezäpfen etc.) auf das Seil aufgefädelt und anschließend zur Seilendverbindung hingeschoben werden muß. Je geringer dabei das Spiel zwischen der Innenkontur der Gummitülle und der Außenkontur der Seilendverbindung ist, um so schwieriger wird dieses Aufschieben.

Aus der FR-E-71.087 ist weiterhin eine Seilendverbindung bekannt, bei der der Seilendbereich mit einem Adapter verbunden ist, in dem die Verbindungsstelle vollständig mittels elastischem bzw. deformierbarem Material ummantelt ist.

Dabei ist das Seilende auch zu einer Schlaufe gelegt.

FR-A-1.160.841 zeigt dagegen eine Seilendverbindung, bei der der Endbereich des Seiles zu einer Schlaufe gelegt und unter Belassung eines mittigen Loches in der Schlaufe die Schlaufe komplett umspritzt wird, ohne dass ein beim Umspritzen eingelegtes Adapterteil existiert.

Es ist daher die Aufgabe gemäß der vorliegenden Erfndung, eine Seilendverbindung sowie ein Verfahren und eine Vorrichtung zu ihrer Erstellung zu schaffen, welche einfach und kostengünstig bei gleichzeitig hoher Funktionssicherheit ist. Eine weitere Aufgabe besteht darin, für den Fall des Umspritzens oder Umgießens der Seilendverbindung eine Spritzform bzw. Gießform zu schaffen.

Diese Aufgaben werden durch die Merkmale der Ansprüche 1, 6 und 11 gelöst. Vorteilhafte Ausführungsformen ergeben sich aus den Unteransprüchen.

Durch die Verwendung eines deformierbaren, insbesondere zähelastisch oder gar plastisch verformbaren, Materials, an der Seilendverbindung gewährleistet dieses Material die Vernichtung kinetischer Energie - wie sie beim Auftreffen der Seilendverbindung auf den Seileinlauf der Wickeltrommel auftreten kann - in hohem Maße. Indem die Verbindungsstelle nicht nur teilweise sondern vorzugsweise ganz von dem deformierbaren Material ummantelt, insbesondere eng anliegend ummantelt, ist, wird eine unbeabsichtigte Lageveränderung dieses Materials vermieden und zusätzlich die Belastbarkeit der Seilendverbindung erhöht.

Wenn das Material sogar stoffschlüssig an der Seilendverbindung, also dem Seil im Endbereich und/öder dem Klemmteil, welches das Seil zu einer Schlaufe verklemmt und/oder dem Adapterteil umschließt, ist auch das Vordringen von Verschmutzungen zwischen deformierbarem Material und die Teile der Seilendverbindung vermieden. Dabei wird unter stoffschlüssig insbesondere eine dichte, hohlraumfreie Anlage des deformierbaren Materials an den Teilen der Seilendverbindung zu verstehen, wie sie sich beim Eingießen, Umspritzen, Umgeben mittels Schrumpfschlauch oder Schrumpffolie etc. ergibt.

Die Herstellung der Seilendverbindung wird in der Regel durch Umspritzen bzw. Umgießen mit Kunststoff im Inneren einer umgebenden Form erfolgen. Die Form ist dabei insbesondere in Längsrichtung, also in Richtung des Seiles, in wenigstens zwei Hälften geteilt, welche beim Gegeneinanderliegen zwischen sich die nötigen Freiräume für das herzustellende Formteil um die Seilendverbindung herum schaffen als auch den Freiraum zur Aufnahme des Adapterteiles. Auch der Auslauf für das Seil der Seilendverbindung befindet sich auf der Berührungsebene der Formhälften.

Zusätzlich ist - integriert in die Form oder beabstandet von der Form - fluchtend mit dem Seil ein Seilspanner angeordnet, um während des Spritzvorganges das Seil soweit von der Form wegzubewegen, daß das Seil und damit die Seilendverbindung im gespannten Zustand umspritzt wird. Zu diesem Zweck kann - insbesondere im Freiraum für das Adapterteil - ein Anschlag zum Lagefixieren des Adapterteils vorhanden sein. Der Kunststoff ist in der Regel ein thermoplastischer Kunststoff. Beim Umspritzen bzw. Umgießen wird dabei so vorgegangen, daß die bis auf das umgebende elastische Material, also den Kunststoff, fertige Seilendverbindung in die eine Formhälfte eingelegt, dabei ggf. das Adapterteil am Anschlag dieser einen Formhälfte angelegt, wird und das stromaufwärts der Seilendverbindung vorhandene Seil durch den Auslaß und den Seilspanner hindurch verläuft. Nachdem die zweite Formhälfte angesetzt ist, wird die mit dem beheizbaren Vorratsbehälter für den Kunststoff über eine möglichst kurze Leitung bzw. einen Rohrstutzen verbundene Auslaßdüse an das offene Ende des Einspritzkanales der Form angesetzt, und das Ventil für die Zufuhr des flüssigen oder wenigstens teigigen Kunststoffes geöffnet. Gleichzeitig wird auf den spritzfähigen Kunststoff im beheizten Vorratsbehälter Druck ausgeübt und die erforderliche Menge an Kunststoff in die Spritzform hineingedrückt. Vorher wurde das Seil mittels des Seilspanners gegenüber der Form gespannt und in diesem Zustand während des Spritzvorganges gehalten.

Der Freiraum zur Aufnahme des Adapterteiles ist dabei gegenüber dem Freiraum für das Formteil abgedichtet, beispielsweise durch den Umfang des Adapterteiles selbst.

Zum schnelleren Abkühlen des Formteiles in der Form kann die Form flüssigkeitsgekühlt sein. Nach dem Aushärten des Formteiles wird die Düse für die Zufuhr des spritzfähigen Kunststoffes, welche mit dem beheizten Vorratsbehälter in Verbindung steht, wieder vom Einspritzkanal abgehoben, insbesondere zusammen mit dem gesamten beheizten Vorratsbehälter.

Eine Ausführungsform gemäß der Erfindung ist im folgenden beispielhaft näher beschrieben. Es zeigen:
- Fig. 1:: unterschiedliche Seilendverbindungen mit unterschiedlich gestalteten Adapterteilen, wobei die Seilendverbindungen nach den Figuren 1b, 1c, 1d, 1f, 1h und 1j nicht Bestandteil der Erfindung sind
- Fig. 2:: eine Schnittdarstellung einer Spritzform mit darin befindlichem, bereits umspritzten Formendteil, und
- Fig. 3:: eine Schemadarstellung der Spritzanlage.

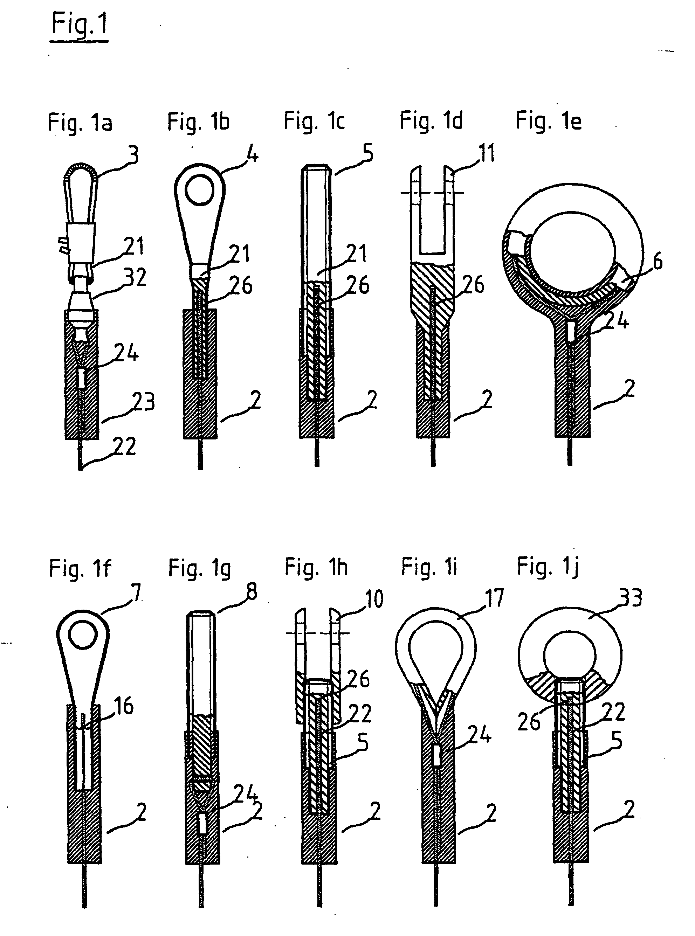

Die Figuren 1a - 1j weisen gemeinsam jeweils ein Seil 30 auf, an dessen Seilendbereich 22 ein Adapterteil 21 befestigt ist. Die Adapterteile sind unterschiedlich, und ebenso die Befestigung des Seilendbereiches 22 an dem Adapterteil: Es kann eine direkte Befestigung z. B. mittels kraftschlüssigem Verklemmen zwischen dem Seilendbereich 22 und dem Adapterteil 21 vorhanden sein, oder der Seilendbereich wird zu einer Schlaufe, welche mit dem Adapterteil formschlüssig verbunden ist, gebildet, welche mittels eines separaten Klemmteiles 24 kraftschlüssig verklemmt wird.

In Fig. 1a ist das Adapterteil ein Wirbelnippel 32, an dessen einem Ende durch eine Querbohrung hindurch ein öffenbarer Karabiner 3 befestigt ist. Am anderen Ende verläuft - wiederum durch eine Querbohrung hindurch - der Seilendbereich 22, welcher dadurch zu einer Schlaufe gelegt werden kann. Die Schlaufe ist durch ein Klemmteil 24 in Form einer handelsüblichen Klemmöse verklemmt. Das zylindrische Formteil 2 reicht von dem Wirbelnippel 32, welcher teilweise mit umspritzt wird, bis in den Normalbereich des Seiles 30, so daß vorzugsweise die gesamte gebildete Seilschlaufe und somit auch das Klemmteil 24 mit umspritzt ist. Das Formteil 2 besitzt vorzugsweise einen größeren Außendurchmesser als der Außendurchmesser des Wirbelnippels 32.

Die gleiche Verbindungsart liegt auch bei Fig. 1g vor, wobei das Adapterteil aus einem Gewindebolzen 8 mit einem Außengewinde besteht, und die Querbohrung an dem vom gewindeseitigen Ende entgegengesetzten Ende angeordnet ist. Das Außengewinde erstreckt sich über mehr als die Hälfte der Länge des Gewindebolzens 8 bis in die Nähe der Querbohrung für das Seil 30.

Der Durchmesser des Formteiles 2 ist wiederum größer als der Außendurchmesser des Gewindebolzens 8, und das Formteil 2 erstreckt sich in Längsrichtung 20 bis in den Bereich des Außengewindes, wodurch eine besonders zugfeste Verbindung zwischen Gewindebolzen und Formteil 2 erreicht wird. Auch hier ist die gesamte Seilschlaufe einschließlich des Klemmteiles 24 mit eingespritzt.

Fig. 1c zeigt als Adapterteil einen ähnlichen Gewindebolzen 5, jedoch ohne Querbohrung am seilseitigen Ende. Statt dessen ist in den Gewindebolzen in die dem Seil zugewandte Stirnfläche eine Sacklochbohrung in Längsrichtung eingebracht, in welcher das freie Ende des Seiles liegt und vorzugsweise zusätzlich durch Verquetschen dieses Endteiles des Gewindebolzens an diesen befestigt. Auch hier ist das Ende des Gewindebolzens, aus welchem das Seil austritt, ummantelt mit dem Formteil 2, und zwar in die Vorwärtsrichtung bis in den Bereich des Außengewindes des Gewindebolzens 5 hinein, und in die Gegenrichtung ausreichend weit über das hintere Ende des Gewindebolzens hinaus, so daß dort nur noch das blanke Seil ummantelt ist. Auch hier ist das Außendurchmesser des Formteiles 2 größer als der Außendurchmesser des Gewindebolzens. Exakt das Gleiche gilt für die Lösung gemäß Fig. 1h, wobei auf das vordere freie Ende des Gewindebolzens 5 bereits eine Gabelkopf 10 mit entsprechendem Innengewinde aufgeschraubt ist, die eine gabelförmige Öse zum Befestigen an einem anderen Bauteil aufweist.

Die gleiche Art der Befestigung des Seilendbereiches 22 im Adapterteil und der Ummantelung liegt auch bei der Lösung gemäß Figuren 1b und 1d vor. Dort ist der Seilendbereich in einem Sackloch anstelle in einem Gewindebolzen direkt in dem Sackloch 26 eines Augenbolzens 4 bzw. Gabelkopfes 11 untergebracht, die lediglich unterschiedliche Außenabmessungen besitzen: In Fig. 1b weist das hintere Ende des Augenbolzens, in welchem sich das Sackloch für den Seilendbereich 22 befindet, einen relativ geringen Außendurchmesser und damit eine relativ geringe Wandstärke um den Seilendbereich 22 herum auf, so daß hier ein mechanisches Verquetschen gut möglich ist.

Zusätzlich ist der Bereich unter dem Auge konisch erweiternd in der Außenkontur ausgebildet

Demgegenüber ist bei der Lösung gemäß Fig. 1d der Gabelkopf 11 mit einem relativ großen Durchmesser ausgestattet, der erst im Bereich des Sackloches konisch in einen kleineren Durchmesser übergeht. Das Sackloch 26 und damit auch der Seilendbereich dringen dabei jedoch bis in den Bereich des größeren Durchmessers des Gabelkopfes 11 vor.

Fig. 1f zeigt das Verklemmen des freien Seilendbereiches 22 mit einem Seilschuh 7, wobei dieser Seilschuh 7 als Blechbiegeteil ausgeführt ist. Im hinteren Bereich, in dem die Verbindung mit dem Seil vorhanden sein soll, sind in bekannter Art und Weise die seitlich überstehenden Teile des Blechteiles halbkreisförmig nach innen gebogen, und liegen im Abstand zum mittleren Bereich des Seilschuhs 7. Nach Einschieben des Seilendbereiches in diesen Abstand können diese gegen das Mittelteil gepreßt werden und verklemmen damit den Seilendbereich 22 mit dem Blechteil des Seilschuhs 7.

Das Formteil 2 umschließt dabei den gesamten Klemmbereich einschließlich des freien vorderen Endes des Seilendbereiches 22, und reicht nach hinten über das hintere Ende des Seilschuhs 7 hinaus, so daß dort noch über eine ausreichende Strecke ausschließlich das Seil selbst umschlossen wird.

Im Gegensatz dazu reichte bei den Lösungen gemäß Fig. 1b - 1d die Ummantelung nicht unbedingt bis zum im Sackloch aufgenommenen vorderen Ende des Seiles nach vorne.

Gegenüber den bisher beschriebenen Seilendverbindungen stellen die Lösungen gemäß Fig. 1e und 1i eine erfindungsgemäße Lösung dar. Dort wird der Seilendbereich wiederum zu einer Schlaufe gelegt und verklemmt, allerdings nicht nur durch eine Durchgangsbohrung eines Adapterteiles hindurrch, sondern um ein Adapterteil herum, welches eine Befestigungsöffnung aufweist, die dann selbst innerhalb der gebildeten Seilschlaufe zu liegen kommt.

Im Fall der Ausführungsfomn gemäß Fig. 1i ist der Adapter eine an sich bekannte Kausche, also ein tropfenförmig gebogenes, in der Mitte offenes Teil meist aus Blech gebogen, um welches herum der Teilendbereich zu einer Schlaufe gelegt werden und mittels eines Klemmteiles 24 zu einer Schlaufe verklemmt werden kann. Wenn das Klemmteil 24 nahe genug an der Kausche sitzt, wird dadurch die Kausche 17 formschlüssig in der Schlaufe des Seiles gehalten und kann aus dieser nicht entfernt werden. Die Ummantelung mit dem Formteil 2, die wiederum im Querschnitt vorzugsweise zylindrisch ausgebildet ist, deckt das gesamte Klemmteil in Längsrichtung ab, sowie den Bereich der parallel laufenden Seilstränge über das freie Ende des Seiles hinaus nach hinten. Zusätzlich kann nach vorne der Beginn des Schlaufenbereiches des Seiles bis zur Kausche und teilweise auch die Kausche selbst mit eingespritzt werden, bis zum Beginn deren Befestigungsöffnung. im Gegensatz dazu ist bei der Lösung gemäß Fig. 1e der Seilenendbereich in Form einer Schlaufe um einen Ring 6 herumgelegt, der im Querschnitt U-förmig oder C-förmig ausgebildet sein kann, wie dies auch bei der Kausche 17 in der Regel der Fall ist. Selbst ein geschlossener rohrförmiger Querschnitt mit nur Öffnungen an den Ein- und Auslaufstellen des Seiles sind für den Ring 6 bzw. die Kausche 17 möglich.

Im Gegensatz zur Lösung gemäß Fig. 1i ist bei dem Ring gemäß Fig. 1e auch der gesamte Bereich des Ringes über den gesamten Querschnitt, also im Innenumfang ebenso wie im Außenumfang, von dem Kunststoff ummantelt bzw. eingespritzt. Nach hinten erstreckt sich die Ummantelung wiederum über das freie Seilende hinaus, und selbstverständlich ist auch das gesamte Klemmteil 24 ummantelt.

Das Material der Ummantelung besteht aus einem elastischen bzw. gar deformierbaren Material, in der Regel einem Kunststoff. dabei handelt es sich in der Regel um einen thermoplastischen Kunststoff, insbesondere einen Schmelzklebstoff, der bei Temperaturen unter 300 °C, insbesondere unter 200 °C, insbesondere unter 150 °C bereits niedrig viskos teigig oder insbesondere spritzfähig wird. Die Viskosität bei 200 °C beträgt dabei zwischen 1.900 und 7.000 mPa.s., und der Erweichungspunkt liegt zwischen 120 °C und 175 °C, insbesondere zwischen 140 °C und 160 °C.

Die Glasübergangstemperatur liegt zwischen -25 °C und -42 °C.

Beim Herstellen der Ummantelung mittels Einspritzen in eine Form beträgt der Spritzdruck maximal 100 bar, vorzugsweise maximal 20 bar oder vorzugsweise maximal 5 bar. Die Spritztemperatur liegt unter 300 °C, insbesondere unter 250 °C, insbesondere unter 150 °C. Die Ummantelung kann anstelle des Umspritzens auch durch Überziehen eines Schrumpfschlauches oder einer Schrumpffolie hergestellt werden, die in üblicher Art und Weise mittels Erwärmen aufgeschrumpft wird. Auch eine Kaltverpressung des Ummantelungsmaterials ist möglich.

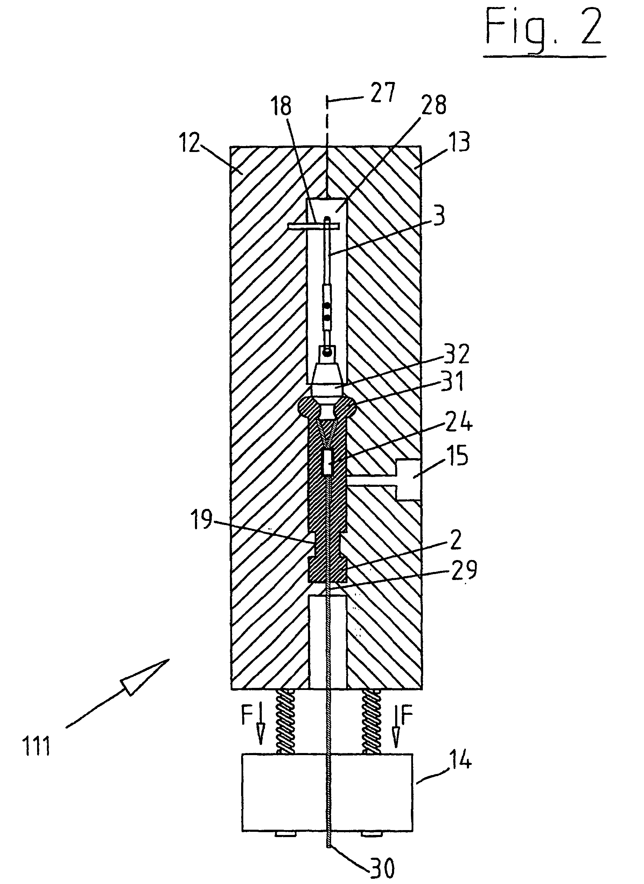

Fig. 2 zeigt eine Spritzform mit darin befindlicher fertiggestellter Seilendverbindung. Die Spritzform besteht aus zwei gegeneinander gelegten, im wesentlichen gleich gestalteten Spritzformhälften 12, 13, wobei die eine Spritzformhälfte 13 einen Einspritzkanal 15 aufweist, der vom inneren Freiraum für das herzustellende Formteil bzw. Spritzteil nach außen führt.

Dabei ist zwischen den Formhälften einerseits ein Freiraum 28 zur Aufnahme des Adapterteiles bzw. wenigstens eines Teiles des Adapterteiles vorhanden, und ein demgegenüber abgetrennter Freiraum für das herzustellende Formteil.

Die Berührungsebene 27 zwischen den beiden Spritzformhälften 12, 13 läuft durch die Mitte der in der Regel rotationssymmetrischen Freiräume. Im vorliegenden Fall ist der Freiraum für das Formteil 2 durch das Adapterteil, im Fall der Figur 2 einem Wirbelnippel 32 mit daran befestigtem Karabiner 3 gegenüber dem Freiraum 28 zur Aufnahme des Karabiners 3 und eines Teils des Wirbelnippels 32 abgetrennt, indem im Übergangsbereich zwischen dem Freiraum für das Formteil 2 und dem Freiraum 28 der Wirbelnippel 32 paßgenau aufgenommen werden kann. Im Freiraum 28 zur Aufnahme des Karabiners ist ferner in der einen Formhälfte 12 ein Anschlag 18 zum Einhängen des Karabiners für dessen Lagejustierung vorhanden. Am gegenüberliegenden Ende der Form verläßt das Seil 30 die Form durch einen Auslauf 29, und kann außerhalb der Form gegenüber dem Anschlag 18 gespannt werden, so daß das anschließende Umspritzen im gespannten Zustand des Seiles erfolgt, in der auch der Wirbelnippel 32 den Durchlaß zwischen den beiden Freiräumen dicht abschließt.

Der Auslaß 29 sollte dabei eine Länge wenigstens des 5fachen Durchmessers des Seiles 30 besitzen, und im Durchmesser möglichst exakt dem Durchmesser des Seiles 30 entsprechen, um hier ein Austreten des Kunststoffes entlang des Außenumfanges des Seiles am Auslaß 29 zu vermeiden.

Das Seil 30 wird im gespannten Zustand während des Spritzens gehalten, indem das Seil stromaufwärts der herzustellenden Seilendverbindung in einem Seilspanner 14 in Längsrichtung festgehalten wird, und dieser Seilspanner 14 beispielsweise mittels der Kraft einer oder mehrerer Federn F von der Form wegbewegt und demgegenüber gespannt wird.

Im Außenumfang des Formteiles 2 ist femer insbesondere im hinteren Bereich eine Ringnut 19 durch einen entsprechenden ringförmigen Vorsprung in dem umgebenden Formkörper ausgebildet, um dort später Zusatzteile leicht befestigen zu können.

Am vorderen Ende des Formteiles 2 ist dieser mit einem nach außen ringförmig vorstehenden, im Querschnitt gerundeten, Wulst ausgestattet, um das dort austretende Adapterteil besonders zuverlässig gegen mechanische Beschädigungen zu schützen.

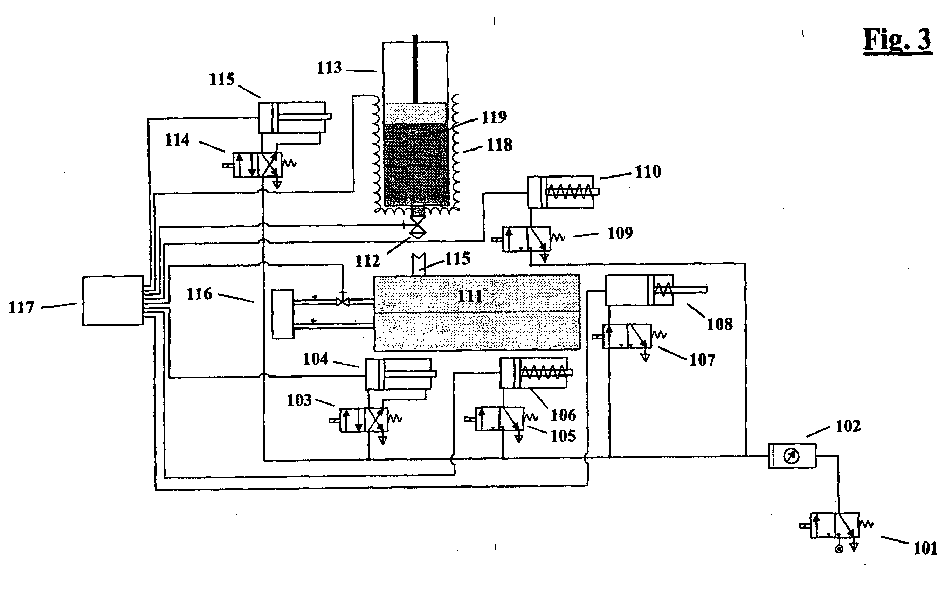

Fig. 3 zeigt die Schemadarstellung der Spritzanlage, in deren Mittelpunkt die in Längsrichtung teilbare Spritzform 111 gemäß Fig. 2 dargestellt ist. Der Seilspanner 14 ist aus Übersichtlichkeitsgründen in Fig. 3 nicht dargestellt, jedoch ist der Pneumatikzylinder 108 zum Bewegen des Seilspanners 14 in die gespannte von der entspannte Position und umgekehrt vorgesehen. Der Pneumatikzylinder 108 wird mittels des Ventils 107 angesteuert.

Die Spritzform 111 ist ferner mit einer in Fig. 2 nicht dargestellten Wasserkühlung in Form eines Kühlkreislaufes 116 mit Rückkühler und Absperrventil ausgestattet.

Das vorherige Klemmen des Seiles in dem nicht dargestellten Seilspanner 14 erfolgt mittels eines separaten Pneumatikzylinders 106, der über ein Ventil 105 angesteuert wird.

Da die Spritzform 1 in Längsrichtung geteilt ist und wegen der besseren Handhabung beim Einlegen der Teile die Berührungsebene horizontal liegt, muß für das Entnehmen der fertigen Seilendverbindung das Oberteil anhebbar sein. Der aus dem Oberteil der Spritzform 111 nach oben weisende angedeutete Einspritzkanal 15 ist deshalb nicht ständig mit dem Behälter 119 für das Spritzmedium verbunden, der an seinem Außenumfang mit einer Heizung 118 ausgestattet ist. Statt dessen befindet sich am Auslaß des Behälters 119 eine verschließbare Düse 112, die auf den Einspritzkanal 15 nach dem Schließen der Form aufsetzbar ist, was mittels des Pneumatikzylinders 115 geschieht, welcher mittels des Ventils 114 angesteuert wird.

Nach dem Spritzen und dem Abkühlen und Verfestigen des Spritzteiles wird die Düse 12 wiederum nach oben vom Einspritzkanal 15 entfernt und das Spritzteil, also die gesamte Seilendverbindung, aus der dann wieder geöffneten Spritzform ausgeworfen mit Hilfe des Pneumatikzylinders 110, welcher vom Ventil 109 angesteuert wird.

Sämtliche Pneumatikzylinder werden von einer zentralen Druckluftversorgung aus mit Druckluft versorgt, deren Zuleitung über ein Hauptventil 101 absperrbar ist und vor der Zuführung zur Spritzgußmaschine über einen zentralen Druckminderer 2 geleitet wird.

Der Pneumatikzylinder 104 bewirkt das Öffnen bzw. Schließen der Sicherheitstür der Spritzgußmaschine, und wird von einem Ventil 103 angesteuert.

### BEZUGSZEICHENLISTE

- 2: Formteil
- 3: Karabiner
- 4: Augenbolzen
- 5: Gewindebolzen
- 6: Ring
- 7: Seilschuh
- 8: Gewindebolzen
- 9: Gewindebolzen
- 10: Gabelkopf
- 11 1: Gabelkopf
- 12: Spritzform-Hälfte
- 13: Spritzform-Hälfte
- 14: Seilspanner
- 15: Einspritzkanal
- 17: Kausche
- 18: Anschlag
- 19: Ringnut
- 20: Längsrichtung
- 21: Adapterteil
- 22: Seilendbereich
- 23: Verbindungsstelle
- 24: Klemmteil
- 25: freies Ende
- 26: Sackloch
- 27: Berührungsebene
- 28: Freiraum
- 29: Auslaß
- 30: Seil
- 31: Ringwulst
- 32: Wirbelnippel
- 33: Ringöse
- 101: Hauptventil
- 102: Druckminderer
- 103: Ventil für die Funktion Tür öffnen/schließen
- 104: Pneumatikzylinder für die Funktion Tür öffnen/schließen
- 105: Ventil für die Funktion Seil klemmen
- 106: Pneumatikzylinder für die Funktion Seil klemmen
- 107: Ventil für die Funktion Seil spannen
- 108: Pneumatikzylinder für die Funktion Seil spannen
- 109: Ventil für die Funktion Spritzteil auswerfen
- 110: Pneumatikzylinder für die Funktion Spritzteil auswerfen
- 111: Spritzform
- 112: Düse
- 113: Vorratsbehälter für Spritzstoff
- 114: Ventil für die Funktion Vergußeinheit heben/senken
- 115: Pneumatikzylinder für die Funktion Vergußeinheit heben/senken
- 116: Kühlkreislauf mit Rückkühler
- 117: Speicherprogrammierbare Steuerung (SPS)
- 118: Heizung
- 119: Schmelzklebstoff
- F: Feder

## Patentansprüche

1. Verfahren zum wenigstens teilweisen Ummanteln der Verbindungsstelle (23) zwischen einem Adapterteil (21) und einem Seilendbereich (22) mit einem deformierbaren Material, insbesondere Kunststoff, wobei das Adapterteil dem Befestigen weiterer Teile am Seil dient und mit dem Seilendbereich wenigstens in Längsrichtung fest verbunden ist und wobei
die Verbindungsstelle (23) mit dem deformierbaren Material umspritzt wird,
**dadurch gekennzeichnet, daß**
das Seil (30) im Seilendbereich (22) während des Umspritzens gespannt gehalten wird.

2. Verfahren nach Anspruch 1,
**dadurch gekennzeichnet, daß**
das Umspritzen mittels eines erwärmten Schmelzklebstoffes, insbesondere eines im erwärmten. Zustand niedrigviskosen Schmelzklebstoffes, insbesondere eines modifizierten Polyamids, Polyurethans, Polyethylens, oder Polyoximethylens (POM) geschieht, und insbesondere das Umspritzen bei Temperaturen unter 300°C, insbesondere unter 250°C, insbesondere unter 200°C, insbesondere unter 150°C vorgenommen wird.

3. Verfahren nach Anspruch 2,
**dadurch gekennzeichnet, daß**
das Umspritzen im kalten Zustand mittels Silikonen, elastischen Epoxidharzen und/oder elastischen Polyurethanen geschieht.

4. Verfahren nach einem der vorhergehenden Verfahrensansprüche,
**dadurch gekennzeichnet, daß**
das Umspritzen bei Drücken unter 100 bar, insbesondere unter 20 bar, insbesondere unter 10 bar, insbesondere unter 10 bar, insbesondere unter 5 bar vorgenommen wird.

5. Verfahren nach einem der vorhergehenden Verfahrensansprüche,
**dadurch gekennzeichnet, daß**
im Seilendbereich (22) vor dem Umspritzen mit dem deformierbaren Material die Filamente am freien Ende und/oder in einem vom Ende zurückversetzten Bereich, insbesondere an der Verbindungsstelle (23), voneinander gelöst werden, und insbesondere das Umspritzen in einer umgebenden Form geschieht.

6. Form zum wenigstens teilweisen Umspritzen einer Verbindungsstelle (23) zwischen einem Adapterteil (21) und einem Seilehdbereich (22), insbesondere gemäß dem Verfahren nach einem der vorhergehenden Verfahrensansprüche, mit wenigstens zwei Spritzformhälften-(12, 13), deren Berührüngsebene (27) parallel zur Längsrichtung (20) des Seils (30) liegt, und die zwischen sich den Freiraum (28) zum Ausspritzen definieren,
**dadurch gekennzeichnet, daß**
eine Spritzformhälfte (12 bzw. 13) einen Anschlag (18) zum Einhängen des Adapterteiles (21) aufweist, welcher in den Freiraum (28) und insbesondere über die Berührungsebene (27) hinwegragt, und insbesondere der Auslaβ (29), mit dem die Spritzformhälften (12, 13) direkt am Seil (30) anliegen, eine axiale Länge entsprechend wenigstens, dem Fünffachen, insbesondere wenigstens dem Zehnfächen, insbesondere wenigstens dem 20fachen des Durchmessers des Seils (30) beträgt.

7. Form nach Anspruch 6,
**dadurch gekennzeichnet, daß**
der Freiraum (28) für das Adapterteil (21) bei geschlossener Spritzform getrennt, insbesondere durch das Adapterteil (21) selbst getrennt, ist vom Spritzraum (31).

8. Form nach einem der vorhergehenden Formansprüche,
**dadurch gekennzeichnet, daß**
die Form mittels Federn (F) gegenüber einem Seilstrecker (14), in welchem das stromaufwärtige Trum des Seiles (30) klemmend gehalten ist, auf Abstand gehalten wird.

9. Form nach einem der vorhergehenden Formansprüche,
**dadurch gekennzeichnet, daß**
die Formhälften (12, 13) bzw. die Formteile aus Leichtmetall, insbesondere aus Aluminium bestehen und insbesondere eine Beschichtung aus einem Material mit möglichst geringem Haftungswert, insbesondere PTFE, aufweisen.

10. Form nach einem der vorhergehenden Formansprüche,
**dadurch gekennzeichnet, daß**
die Formhälften (12, 13) aus Metall, insbesondere aus Leichtmetall, bestehen und auf der Kontaktfläche zum Formteil hin eine verschleißfeste Beschichtung, die überwiegend aus Aluminiumoxiden besteht, aufweist, weiche insbesondere an ihrer freien Oberfläche zusätzlich mit einem Kunststoff auf Basis von Polytetrafluoretylen (PTFE) beschichtet ist.

11. Seilendverbindung mit
- einem Seilendbereich (22) und
- einem Adapterteil (21), welches dem Befestigen weiterer Teile am Seil dient, wobei das Adapterteil (21) und der Seilendbereich (22) wenigstens in Längsrichtung (20) fest miteinander verbunden sind,
wobei
die Verbindungsstelle (23), welche das Adapterteil (21) und den Seilendbereich (22) gegeneinander fixiert, wenigstens teilweise von einem elastischen bzw. deformierbaren Material ummantelt ist, wobei
die Seilendverbindung ein separates Klemmteil (24) umfaßt, welche zwei Stellen des gleichen, zu einer Schlaufe gelegten Seilendbereichs fest, gegeneinander verklemmt, wobei das Klemmteil (24) vollständig von dem deformierbaren Material ummantelt ist, wobei
das elastische bzw. deformierbare Material ein Kunststoff in Form eines Schmelzklebstoffes ist.

12. Seilendverbindung nach Anspruch 11,
**dadurch gekennzeichnet, daß**
das deformierbare Material ein elastisches, insbesondere zähelastisches Material und/oder ein plastisch verformbares Material, insbesondere ein Kunststoff, insbesondere ein transparenter Kunststoff, ist.

13. Seilendverbindung nach einem der vorhergehenden Ansprüche 11 oder 12,
**dadurch gekennzeichnet, daß**
die Verbindungsstelle (23) eng anliegend von dem deformierbaren Material umgeben ist, insbesondere die Verbindungsstelle (23) stoffschlüssig, insbesondere gut klebend, von dem deformierbaren Material umgeben ist.

14. Seilendverbindung nach einem der vorhergehenden Ansprüche 11 bis 13,
**dadurch gekennzeichnet, daß**
die Verbindungsstelle (23) vollständig von dem deformierbaren Material ummantelt ist, und insbesondere das ganze Adapterteil (21) mit dem deformierbaren Material ummantelt ist.

15. Seilendverbindung nach einem der vorhergehenden Ansprüche 11 bis 14,
**dadurch gekennzeichnet, daß**
der Kunststoff ein Schmelzklebstoff ist, und insbesondere der Schmelzklebstoff bei Temperaturen unter 300°C, insbesondere unter 200°C; insbesondere unter 150°C bereits niedrigviskos teigig und insbesondere spritzfähig wird, und insbesondere der Schmelzklebstoff im erwärmten Zustand mit einem geringen Spritzdruck von maximal 100 bar, vorzugsweise maximal 20 bar, vorzugsweise maximal 5 bar spritzfähig zum Spritzen in einer Spritzform ist.

16. Seilendverbindung nach einem der vorhergehenden Ansprüche 11 bis 15,
**dadurch gekennzeichnet, daß**
das Seil mit seinem freien Ende (25) in einem Sackloch (26) eines Klemmteils (24) oder des Adapterteiles (21) endet und wenigstens die Mündung des Sackloches (26) von dem deformierbaren Material ummantelt ist.

17. Seilendverbindung nach einem der vorhergehenden Ansprüche 11 bis 16,
**dadurch gekennzeichnet, daß**
eine so große Länge des Seilendbereichs (22) von dem deformierbaren Material ummantelt ist, daß die notwendige Kraft zur Überwindung der Haftreibung zwischen Seil und deformierbaren, ummantelndem Material wenigstens 50%, insbesondere wenigstens 80%, insbesondere wenigstens 100% der Zugfestigkeit des Seils (30) beträgt.

18. Seilendverbindung nach einem der vorhergehenden Ansprüche 11 bis 17,
**dadurch gekennzeichnet, daß**
es sich bei dem Seil (30) um ein aus mehreren Filamenten bestehendes, insbesondere gezwirntes, litzenartiges Seil handelt, und insbesondere das Seil aus Metall besteht.

19. Seilendverbindung nach einem der vorhergehenden Ansprüche 11 bis 18,
**dadurch gekennzeichnet, daß**
das Seil aus einem Kunststoff, insbesondere einem Künststoff der erst ab 150°C, insbesondere ab 200°C, insbesondere ab 300°C teigig wird, besteht.

## Claims

1. A method to at least partially enclosing the connecting location (23) between an adaptor member (21) and a cable end region (22) with a deformable material, in particular plastic material, whereupon the adaptor member is employed to clamp up another pieces to the cable and at least in the longitudinal direction is closely clamped up to the cable end region whereupon the connecting location (23) is injected with the deformable material, **characterized in that** in the cable end region (22), the cable (30) will be held tensioned during injection.

2. A method as set forth in claim 1, **characterized in that** the injection is effected by means of a hot melt adhesive, in particular by means of a hot melt adhesive which has a low viscosity when heated, in particular by means of a polyamide, by means of a polyurethane, by means of polyethylene or a modified polyoxymethylene, and in particular the injection is effected at temperatures lower than 300° C in particular lower than 250° C in particular lower than 200° C in particular lower than 150° C.

3. A method as set fort in claim 2, **characterized in that** the cold state injection is effected by means of silicone, elastic epoxy resin and/or elastic polyurethane.

4. A method as set forth in one of the preceding claims, **characterized in that** the injection is effected at pressures lower than 100 bar, in particular lower than 20 bar, in particular lower than 10 bar, in particular lower than 5 bar.

5. A method as set forth in one of the preceding claims, **characterized in that** in the cable end region (22), before injecting the deformable material, the wires at the free end and/or from a region before the end, in particular at the connecting location (23), are dettached one from the other, and in particular the injection is effected inside a mold.

6. A mold for at least partially injecting a connecting location (23) between an adaptor member (21) and a cable end region (22), in particular according to a procedure as it has been set forth in one of the preceding claims, with at least two halves of the injection mold (12, 13), whose contact plane (27) is parallel to the longitudinal direction (20) of the cable (30), and which are shaping in between the free room (28) for injection, **characterized in that** one of the injection mold halves (12 and 13 respectively) has a lock to hook the adaptor member (21) protruding towards the free room (28), and in particular over the contact plane (27), and in particular the exit orifice (29), with which the halves of the injection mold (12, 13) are seating directly on the cable (30), has an axial length at least five times, in particular at least ten times, in particular at least twenty times greater than the cable diameter (30).

7. A mold as set forth in claim 6, **characterized in that** on closing the injection mold, the free room (28) for the adaptor member (21) is separated with respect to the injection room (31), in particular by means of the adaptor member (21).

8. A mold as set forth in one of the preceding mold claims, **characterized in that** by means of several springs (F), the mold is held at a spacing with respect to a cable stretcher (14) where the upstream run of the cable is clampingly held.

9. A mold as set forth in one of the preceding mold claims, **characterized in that** the mold halves (12, 13) and the profiled pieces respectively are made of light metal, in particular aluminium and in particular have a coating layer from a material with the lowest possible adhesion value, in particular PTFE.

10. A mold as set forth in one of the preceding mold claims, **characterized in that** the mold halves (12, 13) are made of metal, in particular light metal, while the contact surfaces from the profiled piece have a wear resistant coating layer, which is in particular made of aluminium oxides, which in particular has its free surfaces supplementary coated with a polytetrafluoroethylene (PTFE) based plastic material.

11. A cable end connection with
- a cable end region (22) and
- an adaptor member (21) employed to clamp up other pieces to the cable, whereupon the adaptor member (21) and the cable end region (22) are closely bound together at least in the longitudinal direction (20), whereupon the connecting location (23) which clamps up together the adaptor member (21) and the cable end region (22) is at least partially coated with an elastic and deformable respectively material, whereupon the cable end connection consists of a separated clamping member (24) which clamps together two points of the same loop shaped cable end region, whereupon the clamping member (24) is completely coated by the deformable material, whereupon the elastic and deformable respectively material is a plastic material having the characteristics of a hot melt adhesive.

12. A cable end connection as set forth in claim 11, **characterized in that** the deformable material is an elastic material, in particular a viscous elastic one and/or a deformable plastic material, in particular a plastic material, in particular a transparent plastic material.

13. A cable end connection as set forth in one of the preceding claims 11 or 12, **characterized in that** the connecting location (23) is closely enclosed by the deformable material, and in particular the connecting location (23) is enclosed by the deformable material which is laid in the form of a shrink foil around it and then shrunk by means of heating.

14. A cable end connection as set forth in one of the preceding claims from 11 to 13, **characterized in that** the connecting location (23) is completely enclosed by the deformable material, and in particular the entire adaptor member (21) is enclosed by the deformable material.

15. A cable end connection as set forth in one of the preceding claims from 11 to 14, **characterized in that** the plastic material is a hot melt adhesive, and in particular the hot melt adhesive, already at temperatures lower than 300° C, in particular lower than 200° C, in particular lower than 150° C, turns pasty with a low viscosity and in particular ready to be injected, and in particular in a heated state the hot melt adhesive may be injected into a low injection pressure injection mold with a pressure not exceeding 100 bar, preferably at the most 20 bar, preferably at the most 5 bar.

16. A cable end connection as set forth in one of the preceding claims from 11 to 15, **characterized in that** the cable ends with its free end (25) into the blind hole (26) either of a clamping member (24) or of an adaptor member (21), and at least the mouth opening of the blind hole (26) is coated by the deformable material.

17. A cable end connection as set forth in one of the preceding claims from 11 to 16, **characterized in that** such a cable end region (22) length is coated by the deformable material thus that the force needed to overcome the friction force between the cable and the coating, deformable material, is at least 50%, in particular 80%, in particular 100% of the cable (30) stretching resistance.

18. A cable end connection as set forth in one of the preceding claims from 11 to 17, **characterized in that** the cable (30) is a cable consisting of more wires, in particular strand like twisted filaments, and in particular the cable is made of metal.

19. A cable end connection as set forth in one of the preceding claims from 11 to 18, **characterized in that** the cable is made of plastic material, in particular of a plastic material turning pasty only from 150° C, in particular from 200° C, in particular from 300° C.

## Revendications

1. Procédé pour le recouvrement au moins partiellement du point de jonction (23) entre un adapteur (21) et une zone de bout de câble (22) avec une matière déformable, spécialement une matière plastique, où l'adapteur sert pour la fixation au câble d'autres pièces et qui au moins dans la direction longitudinale il est étroitement joint à la zone de bout de câble et où le point de jonction (23) est injecté avec la matière déformable, **caractérisé en ce que** dans la zone de bout de câble (22), le câble (30) sera tenu contraint pendant l'injection.

2. Procédé selon la revendication 1, **caractérisé en ce que**, l'injection se réalise avec une matière collante en état fondu qui présente une viscosité diminuée par chauffage, spécialement avec un polyamide, avec un polyuréthane, avec un polyéthylène ou avec des polyoxyméthylènes (POM) modifiés et spécialement l'injection est faite aux températures au-dessous de 300°C, spécialement au-dessous de 250°C, spécialement au-dessous de 200°C, spécialement au-dessous de 150°C.

3. Procédé selon la revendication 2, **caractérisé en ce que**, l'injection en état froid se réalise avec silicone, résine époxide élastique et/ou polyuréthane élastique.

4. Procédé selon l'une des revendications de procédé antérieures, **caractérisé en ce que**, l'injection est faite aux pressions au-dessous de 100 bars, spécialement au-dessous de 20 bars, spécialement au-dessous de 10 bars, spécialement au-dessous de 5 bars.

5. Procédé selon l'une des revendications de procédé antérieures, **caractérisé en ce que**, dans la zone de bout de câble (22) avant de l'injection de la matière déformable les fils du bout libre et/ou d'une zone de devant de bout, spécialement dans le point de jonction (23) sont détachés l'un de l'autre et spécialement l'injection a lieu dans l'intérieur d'un moule.

6. Moule pour l'injection au moins partiellement à un point de jonction (23) d'entre un adapteur (21) et une zone de bout de câble (22), spécialement selon l'une des revendications de procédé antérieures, avec au moins deux demies de moule à injection (12, 13) dont le plan de contact (27) se trouve parallèlement par rapport à la direction longitudinale (20) du câble (30) et qui forment entre elles un espace libre (28) pour injection, **caractérisé en ce que**, l'une d'entre les demies du moule à injection (12 respectivement 13) présente un arrêt (18) pour la fixation de l'adapteur (21) qui sort dans l'espace libre (28) et spécialement au-delà du plan de contact (27) et spécialement l'orifice de sortie (29) où les demies du moule à injection (12,13) sont assises directement sur le câble (30), ont une longueur axiale au moins de cinq fois, spécialement au moins de dix fois, spécialement au moins de vingt fois le diamètre du câble (30)

7. Moule selon la revendication 6, **caractérisé en ce que**, l'espace libre (28) pour l'adapteur (21) à la fermeture du moule à injection est séparé par rapport à l'espace d'injection (31), spécialement même par l'adapteur (21)

8. Moule selon l'une des revendications de moule antérieures, **caractérisé en ce que**, le moule est tenu à distance par l'entremise des ressorts (F) par rapport à un tendeur de câble (14) où est tenu étroitement le bout d'en haut du câble (30)

9. Moule selon l'une des revendications de moule antérieures, **caractérisé en ce que**, les demies de moule (12, 13) respectivement les pièces façonnées sont en métal léger, spécialement en aluminium et spécialement présentent une couche de recouvrement d'une matière à adhérence plus petite que possible, spécialement PTFE.

10. Moule selon l'une des revendications de moule antérieures, **caractérisé en ce que**, les demies du moule (12, 13) sont en métal, spécialement en métal léger et sur les surfaces de contact du côté de la pièce façonnée présentent une couche de recouvrement résistante à l'usure qui spécialement est en oxydes d'aluminium qui spécialement sur ses surfaces libres est couvrie dans un mode supplémentaire avec une matière plastique ayant comme principal élément le polytétrafluoréthylène (PTFE)

11. Jonction au bout du câble, avec
- une zone de bout de câble (22) et
- un adapteur (21) qui sert pour la fixation au câble d'autres pièces, où l'adapteur (21) et la zone de bout de câble (22) sont étroitement joints ensemble, au moins dans la direction longitudinale (20), où le point de jonction (23) qui fixe l'un de l'autre l'adapteur (21) et la zone de bout de câble (22), au moins partiellement est enveloppé avec une matière élastique respectivement déformable, où, la jonction au bout de câble comprend une pièce de serrage (24),distincte qui serre ensemble deux points de la même zone de bout de câble en forme de boucle, où la pièce de serrage (24) est entièrement enveloppée par la matière déformable, ou la matière élastique respectivement déformable est une matière plastique sous la forme d'une matière collante fondue.

12. Jonction au bout du câble selon la revendication 11, **caractérisé en ce que**, la matière déformable est une matière élastique, spécialement une matière élastique visqueuse et/ou c'est une matière déformable du point de vue plastique, spécialement une matière plastique, spécialement une matière plastique transparente.

13. Jonction au bout du câble selon l'une des revendications antérieures 11 ou 12, **caractérisé en ce que**, le point de jonction (23) est étroitement enveloppé par la matière déformable, spécialement le point de jonction (23) est enveloppé par moulage, spécialement avec une bonne adhésion de la matière déformable.

14. Jonction au bout du câble selon l'une des revendications antérieures 11 jusqu'à 13, **caractérisé en ce que**, le point de jonction (23) est entièrement enveloppé par la matière déformable et spécialement l'adapteur (21) est entièrement enveloppé avec la matière déformable.

15. Jonction au bout du câble selon l'une des revendications antérieures 11 jusqu'à 14, **caractérisé en ce que**, la matière plastique est une masse de collage par fusion et spécialement la masse de collage fondue qui déjà aux températures au-dessous de 300°C, spécialement au-dessous de 200°C, spécialement au-dessous de 150°C, devient collante, avec une viscosité diminuée et spécialement bonne d'être injecté et spécialement dans l'état chauffé, la masse de collage fondue peut être injectée dans un moule d'injection à une pression d'injection diminuée de maximum 100 bars, de préférence de maximum 20 bars, de préférence de maximum 5 bars.

16. Jonction au bout du câble selon l'une des revendications antérieures 11 jusqu'à 15, **caractérisé en ce que**, le câble se termine avec son bout libre (25) dans un trou enfoncé (26) à une pièce de serrage (24) ou de l'adapteur (21) et au moins la bouche du trou enfoncé (26) est enveloppée par la matière déformable.

17. Jonction au bout du câble selon l'une des revendications antérieures 11 jusqu'à 16, **caractérisé en ce que**, une telle longueur de la zone de bout de câble (22) est enveloppée par la matière déformable de sorte que la force nécessaire pour vaincre la force de frottement entre le câble et la matière déformable qui l'enveloppe soit au moins 50%, spécialement au moins 80%, spécialement au moins 100% de la résistance à l'extension du câble (30)

18. Jonction au bout du câble selon l'une des revendications antérieures 11 jusqu'à 17, **caractérisé en ce que**, au câble (30) il s'agit d'un câble qui consiste de plusieurs fils, spécialement tordus, comme des fils Litz et spécialement le câble est en métal.

19. Jonction au bout du câble selon l'une des revendications antérieures 11 jusqu'à 18, **caractérisé en ce que**, le câble est d'une matière plastique, spécialement d'une matière plastique qui devient collante à peine à partir de 150°C, spécialement à partir de 200°C, spécialement à partir de 300°C.
